# EUROPÄISCHE PATENTSCHRIFT

(11) **EP 2 934 978 B1**
(45) Veröffentlichungstag und Bekanntmachung des Hinweises auf die Patenterteilung: **24.08.2016**
(21) Anmeldenummer: 13730108.1
(22) Anmeldetag: 12.06.2013
(51) Int. Cl.: B60W 50/00

(54) **VERFAHREN ZUM BEREITSTELLEN EINER BETRIEBSSTRATEGIE FÜR EIN KRAFTFAHRZEUG**
METHOD FOR PROVIDING AN OPERATING STRATEGY FOR A MOTOR VEHICLE
PROCÉDÉ DE RÉALISATION D'UNE STRATÉGIE DE GESTION POUR UN VÉHICULE AUTOMOBILE

(30) Priorität: 19.12.2012 DE 102012024859
(43) Veröffentlichungstag der Anmeldung: 28.10.2015
(73) Patentinhaber: Audi AG, 85045 Ingolstadt (DE)
(72) Erfinder: KRATZSCH, Claudia, 85055 Ingolstadt (DE); RÖSSLER, Hendrik, 85051 Ingolstadt (DE); ENGEL, Sebastian, 85051 Ingolstadt (DE)
(74) Vertreter: Bauer, Dominik Michael
(86) Internationale Anmeldenummer: PCT/EP2013/001727
(87) Internationale Veröffentlichungsnummer: WO 2014/094922

(56) Entgegenhaltungen:
- WO-A1-2012/009620
- WO-A1-2012/014041
- WO-A2-2012/020293
- DE-A1-102008 015 046

## Beschreibung

Die Erfindung betrifft ein Verfahren zum Bereitstellen einer Betriebsstrategie für zumindest ein Kraftfahrzeug auf einem Streckenabschnitt mithilfe von Informationen über in der Umgebung anwesende Kraftfahrzeuge, wobei die Informationen über ein Fahrzeug-Ad-hoc-Netzwerk gesammelt werden.

Fahrzeug-Ad-hoc-Netzwerke dienen der Kommunikation von Kraftfahrzeugen, bei denen u.a. auch eine Information zu einem Betriebsparameter, wie z.B. die Geschwindigkeit eines Kraftfahrzeugs, an ein weiteres Kraftfahrzeug oder eine ortsfeste Infrastrukturkomponente (Englisch: Road side unit, RSU) übertragen werden kann. Diese Information kann dann genutzt werden, um den jeweiligen Betriebsparameter in dem empfangenen Kraftfahrzeug anzupassen. Eine bekannte Technologie zum Bilden eines Fahrzeug-Ad-hoc-Netzwerks ist die Car-to-Car-Kommunikation oder allgemeiner, wenn auch Infrastrukturkomponenten beteiligt sind, die Car-to-X-Kommunikation. Diese Standards sind beispielsweise von dem Car-to-Car-Communication-Consortium erhältlich.

Die US 2011/0208399 beschreibt ein Verfahren zur Ermittlung eines Staurisikos und einer Fahrstrategie, insbesondere einer optimalen Geschwindigkeit, unter Berücksichtigung von Betriebsdaten (z.B. der Geschwindigkeit) anderer Fahrzeuge über Car-2-Car-Kommunikation und Staumeldungen. Der Kraftfahrzeugfahrer kann das ermittelte Ergebnis als Fahrempfehlung angezeigt bekommen.

Die DE 10 2010 054 077 A1 beschreibt ein Verfahren zum Bereitstellen einer Fahrempfehlung, wobei ein wahrscheinliches Geschwindigkeitsprofil für einen dem Fahrzeug vorausliegenden Streckenabschnitt ermittelt wird. Dazu werden aus der Vergangenheit aufgezeichnete Geschwindigkeitsprofile auf Muster untersucht.

Eine Fahrempfehlung, die auf einer Wahrscheinlichkeitsberechnung basiert, spiegelt jedoch nicht die aktuelle Situation wider. Der Nachteil des Stands der Technik ist auch, dass das empfangende Kraftfahrzeug nur auf eine bestehende Situation reagieren kann, ohne dass eine vorausschauende Fahrweise ermöglichst ist, die z.B. eine Staubildung vermeidet. Ein typisches Beispiel ist die Fahrweise an einem Stauende. Erreichen Fahrzeuge ein Stauende und erhöhen deshalb ihre Fahrgeschwindigkeit, so kommt es in vielen Fällen zu einer erneuten, wellenartigen Staubildung hinter dem eigentlichen Stauende, wenn sich zu viele Fahrzeuge gleichzeitig dort befinden.

Die WO 2012/009620 A1 beschreibt ein Verfahren zum Bereitstellen eines dynamischen Verkehrskontrollplaners, wobei in einer potentiellen Konfliktzone betriebsspezifische Informationen der vorhandenen Fahrzone über Fahrzeug-zu-Fahrzeug-Kommunikation gesammelt und ausgewertet werden. Der dynamische Verkehrskontrollplan umfasst Instruktionen für die beteiligten Fahrzeuge, sodass zum Beispiel ein Unfall verhindert werden kann. Ein solcher Plan könnte auch als Betriebsstrategie angesehen werden. Die gesammelten Informationen umfassen beispielsweise eine Geschwindigkeit, einen Abstand oder eine Fahrtrichtung eines Fahrzeugs oder Hinweise auf einen Verkehrsstau.

Aus der DE 10 2008 015 046 A1 ist ein Verfahren zur prädiktiven Steuerung und Regelung eines Hybridantriebs in einem Kraftfahrzeug bekannt. Bei der Auswahl einer Betriebsstrategie wird mindestens eine kommunikationsbasierte Information berücksichtigt, die mittels einer Kommunikation des Kraftfahrzeugs mit zum Beispiel einem anderen Kraftfahrzeug erzeugt wird.

Die Aufgabe der vorliegenden Erfindung ist die Bereitstellung einer Betriebsstrategie, die vorausschauend eine Entwicklung einer Verkehrssituation berücksichtigt.

Diese Aufgabe wird von einem erfindungsgemäßen Verfahren gemäß dem Patentanspruch 1 gelöst. Weiterhin wird die Aufgabe von einer erfindungsgemäßen Verarbeitungseinrichtung gemäß dem Patentanspruch 12 und einem erfindungsgemäßen Kraftfahrzeug gemäß dem Patentanspruch 13 gelöst. Vorteilhafte Weiterbildungen der Erfindung sind durch die Unteransprüche gegeben.

Die Erfindung umfasst ein Verfahren zum Bereitstellen einer Betriebsstrategie für zumindest ein Kraftfahrzeug, das hier als Zielfahrzeug bezeichnet wird und das sich zusammen mit anderen Kraftfahrzeugen, hier Fremdfahrzeuge genannt, auf einem Streckenabschnitt einer Fahrstrecke befindet. Dabei kann ein Fremdfahrzeug auch gleichzeitig ein Zielfahrzeug sein, wenn es sowohl die zur Ermittlung des Modells notwendigen Informationen an die Kommunikationseinrichtung überträgt und eine Betriebsstrategie empfängt.

Die Erfindung basiert auf der Idee, auf der Grundlage von Signalen, die von den Fremdfahrzeugen erzeugt werden, ein digitales Modell einer Verkehrslage des genannten Streckenabschnitts zu erzeugen. Das Zielfahrzeug ist dann dasjenige Kraftfahrzeug, dem durch das erfindungsgemäße Verfahren eine Betriebsstrategie bereitgestellt wird, mit der auf dem Streckenabschnitt eine vorausschauende Fahrweise ermöglicht ist.

Ein Kraftfahrzeug ist bevorzugt ein Kraftwagen, insbesondere ein Personenkraftwagen.

Eine Kommunikationseinrichtung eines Zielfahrzeugs oder auch eines fahrzeugexternen Datenservers empfängt über eine Datenverbindung mit einer jeweiligen Kommunikationseinrichtung mindestens eines Fremdfahrzeugs jeweils mindestens ein Positionssignal des Fremdfahrzeugs, durch welches die Position des Fremdfahrzeugs angegeben ist.

Die Kommunikationseinrichtung des Zielfahrzeugs bzw. des Datenservers ist dazu ausgelegt, mit den entsprechenden Einrichtungen der Fremdfahrzeuge auf dem Streckenabschnitt eine Datenverbindung aufzubauen. Die Kommunikationseinrichtung ist in einem Gerät verwirklicht, das eine Verbindung über ein Ad-hoc-Netzwerk, insbesondere über eine Car-to-X-Kommunikation, aufbauen und darüber kommunizieren kann.

Der Streckenabschnitt umfasst insbesondere einen Bereich, in welchem ein Ad-hoc-Netzwerk über z.B. WLAN (Wireless Local Area Network) aufgebaut werden kann, also insbesondere einen Bereich von vorzugsweise bis zu 100m, 300m, 500m, in mindestens eine Richtung vom Zielfahrzeug aus. Bei einem fahrzeugexternen Datenserver liegt die Reichweite vom Zielfahrzeug aus bevorzugt ebenfalls bei diesen Werten oder sie beträgt von 100m bis 300m, 300m bis 500m oder 100m bis 1000m. Die Kommunikationseinrichtung ist Teil einer Verarbeitungseinrichtung, welche z.B. eine dem Fachmann bekannte Datenverarbeitungseinrichtung, z.B. einen Mikro-Controller oder einen Computer, umfassen kann. Der Vorteil einer fahrzeugintegrierten Verarbeitungseinrichtung ist hierbei für einen Benutzer die ständige Durchführbarkeit des erfindungsgemäßen Verfahrens auf einer Fahrt.

Die Verarbeitungseinrichtung ermittelt anhand aller empfangenen Positionssignale die Positionen der Fremdfahrzeuge. Anhand der Positionen der Fremdfahrzeuge ermittelt die Verarbeitungseinrichtung ein digitales Modell für eine aktuelle Verkehrslage in dem Streckenabschnitt. Zur Ermittlung des Modells wird insbesondere ein Algorithmus zur Simulation von Transportsystemen in großen Netzwerken, z.B. zur Ermittlung eines Nagel-Schreckenberg-Modells, herangezogen.

Das digitale Modell für die aktuelle Verkehrslage in dem Streckenabschnitt beschreibt zumindest den Streckenabschnitt und die darauf befindlichen Fremdfahrzeuge. Auch das zumindest eine Zielfahrzeug kann mit umfasst sein. Das Modell kann in einer Weiterbildung der Erfindung auch Verkehrsinformationen, z.B. Informationen zu einer Geschwindigkeit oder einer Durchschnittsgeschwindigkeit z.B. in verschiedenen Teilabschnitten des Streckenabschnitts umfassen. Das digitale Modell kann als reines Rechenmodell, insbesondere jedoch auch in Gestalt einer digitalen Repräsentation der Umgebung, z.B. einer Karte, realisiert sein. Das digitale Modell kann auch als eine "Mikro-Karte" (Englisch: "MikroTrafficMap") fungieren, also eine Karte der unmittelbaren Umgebung. Eine solche Karte zeigt dann z.B. ein Bild des Streckenabschnitts, auf dem z.B. einzelne Kraftfahrzeuge dargestellt und/oder Teilabschnitte des Streckenabschnitts entsprechend z.B. der Fahrzeugdichte markiert sind.

Das digitale Modell ermöglicht das Beschreiben unterschiedlicher Dynamiken einer Gesamtheit an Kraftfahrzeugen in einer Situation, in der sich mehrere Fahrzeuge verhältnismäßig dicht auf einem Streckenabschnitt befinden, die also z.B. auf dem Streckenabschnitt im Stau stehen. Weiterhin ermöglicht das Modell eine fahrzeuggenaue Auflösung der Verkehrssituation. Im Gegensatz zu Streckenabschnitten, für die das Kartenmaterial von herkömmlichen Navigationsgeräten eine sehr geringe Auflösung hat (z.B. geraden Streckenabschnitten), ermöglicht das Modell auch hier eine hohe und maßstabsgetreue Auflösung des Streckenabschnitts und/oder die Erzeugung einer entsprechenden Karte.

Anhand des digitalen Modells für die aktuelle Verkehrslage ermittelt die Verarbeitungseinrichtung eine Betriebsstrategie zum Betreiben des zumindest einen Zielfahrzeugs auf dem Streckenabschnitt. Dadurch profitiert ein Benutzer eines Zielfahrzeugs, indem eine sinnvolle Betriebsstrategie z.B. kraftstoffsparend ist. Steht der Benutzer z.B. mit seinem Kraftfahrzeug in einem Stau, so vermeidet eine derartige Betriebsstrategie das Ausbilden oder wellenartige Ausbreiten des Staus, was in einem frühen Stadium auch die Bildung eines Staus verhindern kann. Weiterhin fördert eine derartige Betriebsstrategie z.B. das Auflösen eines Staus durch zügiges Beschleunigen am Stauende.

Dies ermöglicht auch eine Steuerung der Gesamtheit der Kraftfahrzeuge, bei der die Kraftfahrzeuge eine Betriebsstrategie bereitgestellt bekommen, die logistisch wichtige Positionen einnehmen.

In einer Weiterbildung des Verfahrens empfängt die Kommunikationseinrichtung des Zielfahrzeugs bzw. des Datenservers mindestens eine zu dem mindestens einen Fremdfahrzeug gehörige Information zu einem Betriebsparameter des jeweiligen Fremdfahrzeugs. Eine Information zu einem Betriebsparameter kann z.B. eine Information zu z.B. einer Geschwindigkeit, einer Durchschnittsgeschwindigkeit oder eines Bremsvorgangs des Fahrzeugs umfassen. Diese Information kann durch die Verarbeitungseinrichtung ebenfalls vorteilsbringend verarbeitet werden.

Die Verarbeitungseinrichtung kann dabei das digitale Modell für die aktuelle Verkehrslage anhand der mindestens einen empfangenen Information zu dem Betriebsparameter des mindestens einen Fremdfahrzeugs ermitteln. Durch das Einbeziehen der Betriebsparameter in das Modell wird das Modell ergänzt und gewinnt an Genauigkeit. Ebenso wird die Ermittlung einer verbesserten Betriebsstrategie ermöglicht, durch die z.B. eine bestimmte Durchschnittsgeschwindigkeit eines Zielfahrzeugs empfohlen oder umgesetzt werden kann.

In einer weiteren Ausführungsform des Verfahrens empfängt die Kommunikationseinrichtung auch mindestens ein Positionssignal, durch welches die Position eines jeweiligen Zielfahrzeugs angegeben ist. Die Kommunikationseinrichtung kann ebenfalls mindestens eine Information zu einem Betriebsparameter des Zielfahrzeugs empfangen. Anhand des mindestens einen Positionssignals kann die Kommunikationseinrichtung die Position des jeweiligen Zielfahrzeugs ermitteln. Anhand der mindestens einen Position und/oder der Information zu dem Betriebsparameter des Zielfahrzeugs kann die Verarbeitungseinrichtung das digitales Modell für die aktuelle Verkehrslage in dem Streckenabschnitt ermitteln. Hierbei ergibt sich der unmittelbare Vorteil eines Benutzers des Zielfahrzeugs, dass er eine für sein Zielfahrzeug zugeschnittene Betriebsstrategie z.B. in Form einer Fahrempfehlung erhält.

In einer bevorzugten Ausführungsform des erfindungsgemäßen Verfahrens kann die Verarbeitungseinrichtung den Streckenabschnitt in Abhängigkeit einer Verkehrslage in verschiedenen seiner Bereiche, insbesondere in Abhängigkeit des Verkehrsaufkommens, der Durchschnittsgeschwindigkeit oder einer empfohlenen Geschwindigkeit für ein Zielfahrzeug, in unterschiedliche Teilabschnitte unterteilen. Dies ermöglicht einer höhere Auflösung des Modells und somit eine verbesserte Betriebsstrategie.

Die Verarbeitungseinrichtung kann in einer weiteren Ausführungsform des Verfahrens zusätzlich mindestens eine Information eines Infrastrukturelements, insbesondere einer Funkbake, zur aktuellen Verkehrssituation des Streckenabschnitts oder eines Teilabschnitts des Streckenabschnitts empfangen. Die mindestens eine zusätzliche Information kann dann zur Berechnung des Modells für die aktuelle Verkehrslage des Streckenabschnitts oder des Teilabschnitts verwendet werden. Vorteilhaft ist dabei, dass ein solches Infrastrukturelement Staumeldungen ausgeben und/oder eine Verkehrssituation vor Ort erfassen kann. Ein Infrastrukturelement hat ebenfalls den Vorteil, dass es z.B. mithilfe eines Sensors auch solche Kraftfahrzeuge auf dem Streckenabschnitt erfassen kann, die nicht über eine Kommunikationseinrichtung und/oder eine Verarbeitungseinrichtung verfügen. In beiden Fällen wird das Modell verbessert.

In einer Ausführungsform des Verfahrens kann die Kommunikationseinrichtung und/oder die Verarbeitungseinrichtung ein Infrastrukturelement auf dem Streckenabschnitt oder einen fahrzeugexternen Datenserver umfassen. Damit kann z.B. für einen Streckenabschnitt, auf dem häufig Staus auftreten, permanent eine situationsangepasste Betriebsstrategie ermittelt werden.

Es hat sich bei dem erfindungsgemäßen Verfahren als vorteilhaft erwiesen, wenn die Verarbeitungseinrichtung eine Fahrempfehlung zur Ausführung der Betriebsstrategie oder eine Karte zu der Verkehrslage des Streckenabschnitts und/oder des mindestens einen Teilabschnitts erzeugt. Damit kann eine Betriebsstrategie in einem Zielfahrzeug umgesetzt werden.

Die Betriebsstrategie wird gemäß einer anderen Weiterbildung des Verfahrens durch die Verarbeitungseinrichtung auf ein Fahrerassistenzsystem, insbesondere auf eine Längs- und/oder Quersteuerung, mindestens eines Zielfahrzeugs übertragen. Ein Benutzer eines Zielfahrzeuges muss somit nicht selbst handeln.

Alternativ oder zusätzlich kann die Verarbeitungseinrichtung die Fahrempfehlung und/oder die Karte an eine Anzeigeeinrichtung zu deren Anzeige, z.B. auf einem Head-Up-Display oder einem Bildschirm eines Infotainmentsystems, übertragen. Hierbei kann der Benutzer eines Zielfahrzeugs entweder selbst entscheiden, wie er sein Kraftfahrzeug betreibt, und/oder er wird über die Betriebsstrategie informiert, und er versteht z.B., aus welchem Grund ein Fahrzeugassistenzsystem z.B. beschleunigt oder nicht beschleunigt. Es besteht hier z.B. auch die Möglichkeit, dass dem Fahrer verschiedene Fahrempfehlungen angezeigt werden, under eine Betriebsstrategie, die z.B. an das Fahrerassistenzsystem übertragen werden kann, auswählt.

In der Karte kann in einer Ausführungsform des Verfahrens mindestens ein Teilabschnitt des Streckenabschnitts in Abhängigkeit einer bestimmten für das Modell der Verkehrslage relevanten Größe, insbesondere des Verkehrsaufkommens, der Durchschnittsgeschwindigkeit oder der empfohlenen Geschwindigkeit, markiert sein. Dies ermöglicht eine höhere Auflösung des Streckenabschnitts und eine übersichtliche, schnell erfassbare Darstellung einer angezeigten Karte.

Die oben gestellte Aufgabe wird ebenfalls von einer Verarbeitungseinrichtung gelöst, die dazu ausgelegt ist, die eine Verarbeitungseinrichtung betreffenden Verfahrensschritte einer der oben beschriebenen Ausführungsformen eines erfindungsgemäßen Verfahrens durchzuführen.

Die oben gestellte Aufgabe wird ebenfalls von einem Kraftwagen, insbesondere einem Personenkraftwagen, gelöst, der eine erfindungsgemäße Verarbeitungseinrichtung umfasst und/oder dazu ausgelegt ist, eine Ausführungsform eines erfindungsgemäßen Verfahrens durchzuführen.

Die Erfindung wird anhand der beigefügten Zeichnungen noch einmal durch konkrete Ausführungsbeispiele näher erläutert. Funktionsgleiche Elemente weisen in den Figuren dieselben Bezugszeichen auf. Dazu zeigt:
Fig. 1 eine Skizze zu einer Ausführungsform des erfindungsgemäßen Verfahrens,
Fig. 2 eine Skizze zu einer weiteren Ausführungsform des erfindungsgemäßen Verfahrens.

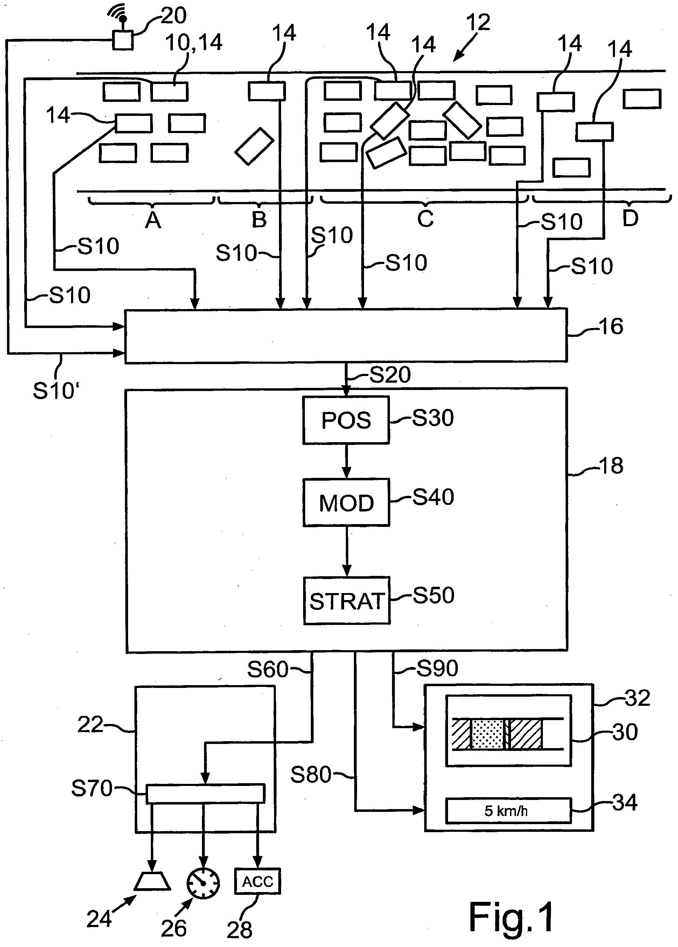

In einem Ausführungsbeispiel ist anhand der Fig. 1 das dem erfindungsgemäßen Verfahren zugrunde liegende Prinzip veranschaulicht.

Auf einem Streckenabschnitt 12 einer Fahrstrecke, z.B. auf einem Abschnitt einer Autobahn, befinden sich mehrere Kraftfahrzeuge, zu denen insbesondere Personenkraftwagen gehören können. Der Streckenabschnitt 12 lässt sich beispielsweise in Teilabschnitte unterteilen, wobei z.B. zwei Teilabschnitte A und C z.B. eine hohe Kraftfahrzeugdichte oder eine niedrige Durchschnittsgeschwindigkeit, ein Teilabschnitt B z.B. eine geringe Kraftfahrzeugdichte oder erhöhte Durchschnittsgeschwindigkeit und ein Teilabschnitt D eine sehr geringe Kraftfahrzeugdichte oder hohe Durchschnittsgeschwindigkeit aufweisen.

Eines der Kraftfahrzeuge ist im vorliegenden Beispiel ein Zielfahrzeug 10, welchem durch das erfindungsgemäße Verfahren eine Betriebsstrategie bereitgestellt wird. Einige der Kraftfahrzeuge 14 sind über eine Datenverbindung, z.B. über WLAN eines Kraftfahrzeug-Ad-hoc-Netzwerks, miteinander verbunden. Die Datenverbindung kommt über eine Kommunikationseinrichtung 16 des jeweiligen Fremdfahrzeugs zustande.

Statusnachrichten, also z.B. Positionssignale oder Informationen zu z.B. der Geschwindigkeit eines Kraftfahrzeugs, können von den Fremdfahrzeugen 14 z.B. zyklisch übertragen werden (Verfahrensschritt S10). Im vorliegenden Beispiel überträgt das Zielfahrzeug 10 ebenfalls die genannten Informationen und ein Positionssignal an die Kommunikationseinrichtung 16, ist also gleichzeitig ein Fremdfahrzeug 14. Das Positionssignal kann z.B. ein Signal eines globalen Navigationssatellitensystems wie z.B. GPS, Galileo, Compass oder Glonass umfassen. Zusätzlich oder alternativ können die Fremdfahrzeuge Informationen zu einem Betriebsparameter, z.B. einer Geschwindigkeit oder einer Durchschnittsgeschwindigkeit an die Kommunikationseinrichtung 16 übertragen (S10). Zusätzlich oder alternativ kann ein Infrastrukturelement 20, insbesondere eine Funkbake, mindestens eine Information zur aktuellen Verkehrssituation des Streckenabschnitts 12 oder eines seiner Teilabschnitte A, B, C, D an die Kommunikationseinrichtung 16 übertragen (S10').

Sowohl die Kommunikationseinrichtung 16 als auch die Verarbeitungseinrichtung 18 können ein Gerät umfassen oder in einem Computerprogramm oder einem Computerprogrammprodukt, das dazu ausgelegt ist, einen entsprechenden Programmcode auszuführen, realisiert sein. Die Kommunikationseinrichtung 16 und/oder die Verarbeitungseinrichtung 18 können alternativ oder zusätzlich in ein Zielfahrzeug 14 integriert sein oder einen fahrzeugexternen Datenserver umfassen.

Bevorzugt kann die Verarbeitungseinrichtung 18 die Kommunikationseinrichtung 16 umfassen. Alternativ, wie hier im Beispiel, ist die Kommunikationseinrichtung 16 von der Verarbeitungseinrichtung 18 unabhängig und überträgt die empfangenen Signale und Informationen der Fremdfahrzeuge 14 an die Verarbeitungseinrichtung 18 (S20). Die Verarbeitungseinrichtung 18, hier z.B. eine Einrichtung eines Navigations-, Fahrerassistenz- oder Infotainmentsystems des Kraftfahrzeugs 10, ermittelt anhand aller Positionssignale die Positionen der Fremdfahrzeuge 14 (S30, "POS").

Anhand der Positionen der Fremdfahrzeuge 14 ermittelt die Verarbeitungseinrichtung 18 ein digitales Modell für eine aktuelle Verkehrslage in dem Streckenabschnitt (S40, "MOD"). Ein solches Modell umfasst z.B. eine MikroKarte, die im vorliegenden Beispiel den Streckenabschnitt 12 und die dazugehörige Verkehrsinformationen umfasst. Das Modell kann dabei die Teilabschnitte A, B, C und D und deren unterschiedliche Verkehrsinformationen berücksichtigen.

Anhand des digitalen Modells ermittelt die Verarbeitungseinrichtung 18 eine Betriebsstrategie zum Betreiben des zumindest einen Zielfahrzeugs 10 auf dem Streckenabschnitt 12 (S50, "STRAT"). Es besteht z.B. die Möglichkeit, dass für die unterschiedlichen Teilabschnitte unterschiedliche Betriebsstrategien ermittelt werden. Befindet sich das Zielfahrzeug 10 z.B. im Teilabschnitt D, so ist es z.B. sinnvoll, dass das Zielfahrzeug 10 beschleunigt und eine normale Fahrgeschwindigkeit wieder aufnimmt, da der Teilabschnitt D z.B. das Stauende umfasst und sich nur wenige Fahrzeuge dort befinden. In der Fig. 1 befindet sich das Zielfahrzeug 10 kurz vor dem Teilabschnitt B. Ein starkes Beschleunigen würde hier z.B. zu einem wellenartigen Ausbreiten des Staus beitragen, weil sich das Zielfahrzeug 10 z.B. in einer Stauwelle befindet und so im Teilabschnitt C z.B. wieder abrupt zum Stillstand kommen würde. Eine sinnvolle Betriebsstrategie wäre hier also eine an die Stauwelle angepasste geringe Durchschnittsgeschwindigkeit von z.B. 5 km/h, um z.B. ein "Stop-and-go" des Zielfahrzeugs 10 zu vermeiden oder zu vermindern.

Die Betriebsstrategie kann von der Verarbeitungseinrichtung 18 als Fahrempfehlung zur Ausführung der Betriebsstrategie oder als Karte 30 erzeugt und ausgegeben werden (S60, S80, S90). Die Fahrempfehlung kann auf ein Fahrerassistenzsystem 22, insbesondere auf eine Längs- und/oder Quersteuerung, des Zielfahrzeugs 10, übertragen werden (S60). Die Längs- und/oder Quersteuerung kann z.B. aufgrund der Fahrempfehlung eine automatische Kraftfahrzeugsteuerung z.B. einer Bremse 24, einer Geschwindigkeitsregelanlage 26 oder einer adaptiven Geschwindigkeitsregelanlage ("ACC", "Adaptive Cruise Control") 28 auslösen (S70).

Die Fahrempfehlung kann jedoch auch als Hinweis 34 in Form z.B. einer Textnachricht an eine Anzeigeeinrichtung 32, z.B. ein Infotainmentsystem, zu dessen Anzeige übertragen werden (S80). Die Betriebsstrategie und/oder das Modell können ebenfalls in einer bildlichen Repräsentation 30 des Modells, z.B. einer Karte 30 realisiert werden und an die Anzeigeeinrichtung 32 übertragen werden (S90). Die Karte 30 kann z.B. eine Aufsicht des Streckenabschnitts 12 umfassen. Auf der Karte 30 kann z.B. mindestens ein Teilabschnitt A, B, C, D des Streckenabschnitts 12 in Abhängigkeit einer bestimmten für das Modell der Verkehrslage relevanten Größe, insbesondere des Verkehrsaufkommens, der Durchschnittsgeschwindigkeit oder der empfohlenen Geschwindigkeit, z.B. farblich markiert sein. Dadurch wird die Karte 30 übersichtlicher, und ein Fahrer eines in der Karte 30 markierten Zielfahrzeugs 10 kann sehen, z.B. wie lange der Stau noch ist und/oder ob er das Stauende schon erreicht hat.

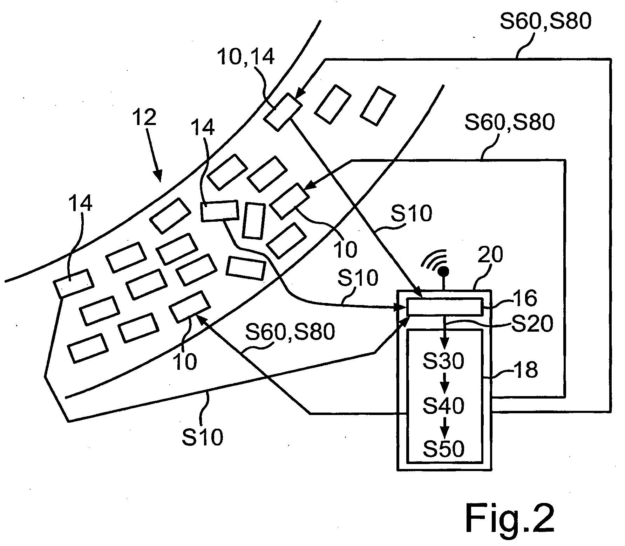

In der Fig. 2 ist ein weiteres Ausführungsbeispiel des erfindungsgemäßen Verfahrens gezeigt.

Das erfindungsgemäße Verfahren verläuft dabei so wie bereits oben zu der Fig. 1 beschrieben. In diesem Beispiel werden jedoch Betriebsstrategien für z.B. drei Zielfahrzeuge 10 ermittelt und als Fahrempfehlung übertragen (S60, S80). Davon ist z.B. nur eines der Kraftfahrzeuge auch ein Fremdkraftfahrzeug 14, das Statusnachrichten an eine Kommunikationseinrichtung 18 überträgt. Eine Funkbake 20 am Straßenrand des Streckenabschnitts 12 kann dabei z.B. einen externen Datenserver, z.B. einen Backend-Server, der wiederum die Kommunikationseinrichtung 16 und/oder die Verarbeitungseinrichtung 18 umfasst, umfassen.

Die Beispiele veranschaulichen die Idee der Erfindung, mittels von den Kraftfahrzeugen erzeugten Signalen ein digitales Modell und eine digitale Karte einer Verkehrslage Streckenabschnitts mithilfe von Umfeldwissen zu ermitteln, und darauf basierend eine Betriebsstrategie für ein Zielfahrzeug zu erzeugen.

Dabei senden Fahrzeuge mittels z.B. Ad-hoc-Kommunikation (WLAN) zyklisch Statusnachrichten aus. Diese beinhalten z.B. Informationen des Fahrzeugs zu dessen Position und Geschwindigkeit. Befindet sich ein Fahrzeug z.B. in einem Stau, empfängt dieses die zyklischen Statusnachrichten der umgebenden Fahrzeuge mittels Kommunikation. Aus der Summe der empfangenen Nachrichten baut sich das Fahrzeug eine Mikro-Karte mit Verkehrsinformationen auf. Diese beinhaltet z.B. Informationen zur durchschnittlichen Geschwindigkeit an Straßensegmenten, die eine geringe Auflösung haben. Dadurch kann das Fahrzeug Antriebsstrategien ableiten, um zum einen das wellenartige Ausbreiten des Staus zu vermeiden und um der Auflösung des Staus durch zügiges Beschleunigen am Ende (Stau löst sich auf) beizutragen.

Das empfangende Fahrzeug kann z.B. durch die Umgebungsinformationen seine Antriebsstrategie im Stau anpassen. Damit wird z.B. der Kraftstoffverbrauch minimiert. Dem z.B. wellenartigen Ausbreiten des Staus wird entgegengewirkt. Der Fahrer erhält z.B. detaillierte Informationen zum Stau, womit dessen Komfort erhöht wird. Dadurch, dass z.B. das Fahrzeug selbst Nachrichten von anderen Fahrzeugen empfängt und auswertet, kann ein exaktes Umfeldbild relativ zum Fahrzeug aufgebaut werden.

Fahrzeuge sind mit einer Kommunikationseinheit (z.B. WLAN) ausgestattet, welche insbesondere zyklische Status-Nachrichten aussendet. Das Empfangsfahrzeug ist ebenfalls mit einer entsprechenden Kommunikationseinheit ausgestattet, insbesondere um diese Nachrichten zu empfangen. Das Empfangsfahrzeug benötigt zusätzlich eine Verarbeitungseinheit, welche die Information der empfangenen Nachrichten zu einer Mikro-Karte mit Verkehrsinformationen verknüpft und daraufhin die Antriebsstrategie automatisch anpasst und/oder dem Fahrer eine Empfehlung zur Antriebsstrategie mittels z.B. HMI (Human-Machine-Interface, Mensch-Maschine-Schnittstelle) gibt.

## Patentansprüche

1. Verfahren zum Bereitstellen einer Betriebsstrategie für zumindest ein Zielfahrzeug (10), das sich zusammen mit anderen Fremdfahrzeugen (14) auf einem Streckenabschnitt (12) einer Fahrstrecke befindet, wobei eine Kommunikationseinrichtung (16) einer Verarbeitungseinrichtung (18) mit einer jeweiligen Kommunikationseinrichtung (16) der Fremdfahrzeuge (14) über ein Ad-hoc-Netzwerk, insbesondere über eine Car-to-X-Kommunikation, verbunden ist, und über die jeweilige Verbindung jeweils ein Positionssignal des Fremdfahrzeugs (14), durch welches die Position des Fremdfahrzeugs (14) angegeben ist, empfängt (S10),
**dadurch gekennzeichnet, dass**
die Verarbeitungseinrichtung (18)
- den Streckenabschnitt (12), in Abhängigkeit einer Verkehrslage in verschiedenen seiner Bereiche, in unterschiedliche Teilabschnitte (A, B, C, D) unterteilt, wobei die Unterteilung in Abhängigkeit des Verkehrsaufkommens, der Durchschnittsgeschwindigkeit oder einer empfohlenen Geschwindigkeit für das Zielfahrzeug (10) erfolgt,
- anhand aller Positionssignale die Positionen der Fremdfahrzeuge (14) ermittelt (S30),
- anhand der Positionen der Fremdfahrzeuge (14) ein digitales Modell für eine aktuelle Verkehrslage in dem Streckenabschnitt ermittelt (S40) und dazu die Teilabschnitte (A, B, C, D) und deren Verkehrsinformation berücksichtigt, durch welches der Streckenabschnitt und die darauf befindlichen Fremdfahrzeuge (14) beschrieben sind, und
- anhand des digitalen Modells für die aktuelle Verkehrslage eine Betriebsstrategie zum Betreiben des zumindest einen Zielfahrzeugs (10) auf dem Streckenabschnitt (12) ermittelt (S50).

2. Verfahren nach Anspruch 1, wobei die Kommunikationseinrichtung (16) mindestens eine zu dem mindestens einen Fremdfahrzeug (14) gehörige Information zu einem Betriebsparameter des jeweiligen Fremdfahrzeugs (14) empfängt (S10) und an die Verarbeitungseinrichtung (18) überträgt (S20), und die Verarbeitungseinrichtung (18) das digitale Modell für die aktuelle Verkehrslage in dem Streckenabschnitt anhand der mindestens einen empfangenen Information zu dem Betriebsparameter des mindestens einen Fremdfahrzeugs (14) ermittelt.

3. Verfahren gemäß Anspruch 1 oder 2, wobei die Kommunikationseinrichtung (16) mindestens ein Positionssignal, durch welches die Position eines jeweiligen Zielfahrzeugs (10) angegeben ist, empfängt (S10), anhand des mindestens einen Positionssignals die Position des jeweiligen Zielfahrzeugs (10) ermittelt (S30) und anhand der mindestens einen Position des Zielfahrzeugs (10) das digitale Modell für die aktuelle Verkehrslage in dem Streckenabschnitt ermittelt (S40).

4. Verfahren gemäß einem der vorhergehenden Ansprüche, wobei die Kommunikationseinrichtung (16) zusätzlich mindestens eine Information eines Infrastrukturelements (20), insbesondere einer Funkbake zur aktuellen Verkehrssituation des Streckenabschnitts (12) oder eines Teilabschnitts (A, B, C, D) empfängt (S10'), und die Verarbeitungseinrichtung (18) die mindestens eine zusätzliche Information zur Berechnung des Modells für die aktuelle Verkehrslage des Streckenabschnitts (12) oder des Teilabschnitts (A, B, C, D) verwendet (S40).

5. Verfahren gemäß einem der vorhergehenden Ansprüche, wobei die Kommunikationseinrichtung (16) und/oder die Verarbeitungseinrichtung (18) ein Infrastrukturelement (20) auf dem Streckenabschnitt (12) oder einen fahrzeugexternen Datenserver umfasst.

6. Verfahren gemäß einem der vorhergehenden Ansprüche, wobei die Verarbeitungseinrichtung (18) in ein Zielfahrzeug integriert ist.

7. Verfahren gemäß einem der vorhergehenden Ansprüche, wobei die Verarbeitungseinrichtung (18) eine Fahrempfehlung zur Ausführung der Betriebsstrategie oder eine Karte (30) zu der Verkehrslage des Streckenabschnitts (12) und/oder des mindestens einen Teilabschnitts (A, B, C, D) erzeugt.

8. Verfahren gemäß Anspruch 7, wobei die Verarbeitungseinrichtung (18) die Fahrempfehlung auf ein Fahrerassistenzsystem (22), insbesondere auf eine Längs- und/oder Quersteuerung mindestens eines Zielfahrzeugs (10) überträgt (S60).

9. Verfahren gemäß Anspruch 7 oder 8, wobei die Verarbeitungseinrichtung (18) die Fahrempfehlung (34) und/oder die Karte (30) an eine Anzeigeeinrichtung (32) zu deren Anzeige überträgt (S80, S90).

10. Verfahren gemäß einem der Ansprüche 7 bis 9, wobei in der Karte (30) mindestens ein Teilabschnitt (A, B, C, D) des Streckenabschnitts (12) in Abhängigkeit einer bestimmten für das Modell der Verkehrslage relevanten Größe des Verkehrsaufkommens, der Durchschnittsgeschwindigkeit oder der empfohlenen Geschwindigkeit markiert ist.

11. Verfahren gemäß einem der vorhergehenden Ansprüche, wobei zumindest ein Fremdfahrzeug (14) auch ein Zielfahrzeug (10) ist.

12. Verarbeitungseinrichtung (18), die dazu ausgelegt ist, die eine Verarbeitungseinrichtung (18) betreffenden Verfahrensschritte eines Verfahrens gemäß einem der Ansprüche 1 bis 11 auszuführen.

13. Kraftwagen, insbesondere Personenkraftwagen, umfassend eine Verarbeitungseinrichtung (18) gemäß Anspruch 12.

## Claims

1. Process to provide an operating strategy for at least one target vehicle (10) which together with other vehicles (14) is situated on a road section (12), wherein a communication device (16) of a processing equipment (18) is connected via an ad hoc network, in particular via car-to-X communication, to a respective communication device (16) of the other vehicles (14) and receives (S10) a positioning signal of the other vehicle (14) via the respective connection each time, giving the position of the other vehicle (14), **characterised in that** the processing equipment (18)
- divides the road section (12) up into different partial sections (A, B, C, D) depending on a road situation in its different regions, wherein the division is carried out depending on the volume of traffic, the average speed or a recommended speed for the target vehicle (10),
- determines (S30) the positions of the other vehicles (14) by means of all positioning signals,
- determines (S40) a digital model for a current road situation in this road section by means of the positions of the other vehicles (14) and, for that purpose, takes the partial sections (A, B, C, D) and their traffic information into consideration, through which the road section and the other vehicles (14) located on it are described, and
- determines (S50) an operating strategy for operating the at least one target vehicle (10) on the road section (12) by means of the digital model for the current road situation.

2. Process according to Claim 1, wherein the communication device (16) receives (S10) at least one piece of information belonging to the at least one other vehicle (14) for an operating parameter of the respective other vehicle (14) and transfers (S20) this to the processing equipment (18), and the processing equipment (18) determines the digital model for the current road situation in this road section, by means of the at least one piece of information received for the operating parameter of the at least one other vehicle (14).

3. Process according to Claim 1 or 2, wherein the communication device (16) receives (S10) at least one positioning signal through which the position of a respective target vehicle (10) is given, determines (S30) the position of the respective target vehicle (10) by means of the at least one positioning signal and determines (S40) the digital model for the current road situation on this road section by means of the at least one position of the target vehicle (10).

4. Process according to one of the above claims, wherein the communication device (16) additionally receives (S10') at least one piece of information of an infrastructure element (20), in particular of a radio beacon for the current road situation of the road section (12) or of a partial section (A, B, C, D), and the processing equipment (18) uses (S40) the at least one additional piece of information for calculating the model for the current road situation of the road section (12) or of the partial section (A, B, C, D).

5. Process according to one of the above claims, wherein the communication device (16) and/or the processing equipment (18) comprises an infrastructure element (20) on the road section (12) or a vehicle external data server.

6. Process according to one of the above claims, wherein the processing equipment (18) is integrated in a target vehicle.

7. Process according to one of the above claims, wherein the processing equipment (18) produces a driving recommendation for carrying out the operating strategy or a map (30) for the road situation of the road section (12) and/or the at least one partial section (A, B, C, D).

8. Process according to Claim 7, wherein the processing equipment (18) transfers (S60) the driving recommendation to a driver assistance system (22), in particular to a longitudinal and/or a cross steering control of the at least one target vehicle (10).

9. Process according to Claim 7 or 8, wherein the processing equipment (18) transfers (S80, S90) the driving recommendation (34) and/or the map (30) to a display device (32) for its display.

10. Process according to one of Claims 7 to 9, wherein at least one partial section (A, B, C, D) of the road section (12) is marked on the map (30) dependant on a particular quantity, which is relevant for the model of the road situation, of the volume of traffic, the average speed or the recommended speed.

11. Process according to one of the above Claims, wherein at least one other vehicle (14) is also a target vehicle (10).

12. Processing equipment (18) designed in such a way as to carry out processing equipment (18) related processing steps of a process according to one of the Claims 1 to 11.

13. Motor vehicle, in particular passenger motor vehicle comprising a processing equipment (18) according to Claim 12.

## Revendications

1. Procédé pour fournir une stratégie de fonctionnement pour au moins un véhicule cible (10) qui se trouve avec d'autres véhicules tiers (14) sur un tronçon de route (12) d'une route à parcourir, un dispositif de communication (16) d'un dispositif de traitement (18) étant relié à un dispositif de communication respectif (16) des véhicules tiers (14) par l'intermédiaire d'un réseau ad-hoc, notamment par l'intermédiaire d'une communication Car-to-X, et recevant (S10) par l'intermédiaire de la liaison respective à chaque fois un signal de position du véhicule tiers (14) par lequel la position du véhicule tiers (14) est indiquée,
**caractérisé en ce que**
le dispositif de traitement (18)
- divise le tronçon de route (12) en différents tronçons partiels (A, B, C, D) en fonction d'une situation de circulation dans différentes zones, la division s'effectuant en fonction du volume de circulation, de la vitesse moyenne ou d'une vitesse recommandée pour le véhicule cible (10),
- détermine (S30) les positions des véhicules tiers (14) à l'aide de tous les signaux de position,
- détermine (S40) un modèle numérique pour une situation de circulation actuelle dans le tronçon de route à l'aide des positions des véhicules tiers (14) et à cet effet prend en compte les tronçons partiels (A, B, C, D) et leur information de circulation par laquelle le tronçon de route et les véhicules tiers (14) se trouvant dessus sont décrits, et
- détermine (S50) une stratégie de fonctionnement pour faire fonctionner l'au moins un véhicule cible (10) sur le tronçon de route (12) à l'aide du modèle numérique pour la situation de circulation actuelle.

2. Procédé selon la revendication 1, selon lequel le dispositif de communication (16) reçoit (S10) au moins une information qui appartient à l'au moins un véhicule tiers (14) et qui concerne un paramètre de fonctionnement du véhicule tiers respectif (14) et la transmet (S20) au dispositif de traitement (18) et le dispositif de traitement (18) détermine le modèle numérique pour la situation de circulation actuelle dans le tronçon de route à l'aide de l'au moins une information reçue qui concerne le paramètre de fonctionnement de l'au moins un véhicule tiers (14).

3. Procédé selon la revendication 1 ou 2, selon lequel le dispositif de communication (16) reçoit (S10) au moins un signal de position par lequel la position d'un véhicule cible respectif (10) est indiquée, détermine (S30) la position du véhicule cible respectif (10) à l'aide de l'au moins un signal de position et détermine (S40) le modèle numérique pour la situation de circulation actuelle dans le tronçon de route à l'aide de l'au moins une position du véhicule cible (10).

4. Procédé selon l'une des revendications précédentes, selon lequel le dispositif de communication (16) reçoit (S10') en plus au moins une information d'un élément d'infrastructure (20), notamment d'une radiobalise, qui concerne la situation de circulation actuelle du tronçon de route (12) ou d'un tronçon partiel (A, B, C, D) et le dispositif de traitement (18) utilise (S40) l'au moins une information supplémentaire pour calculer le modèle pour la situation de circulation actuelle du tronçon de route (12) ou du tronçon partiel (A, B, C, D).

5. Procédé selon l'une des revendications précédentes, selon lequel le dispositif de communication (16) et/ou le dispositif de traitement (18) comprennent un élément d'infrastructure (20) sur le tronçon de route (12) ou un serveur de données externe au véhicule.

6. Procédé selon l'une des revendications précédentes, selon lequel le dispositif de traitement (18) est intégré dans un véhicule cible.

7. Procédé selon l'une des revendications précédentes, selon lequel le dispositif de traitement (18) produit une recommandation de conduite pour la réalisation de la stratégie de fonctionnement ou une carte (30) qui concerne la situation de circulation du tronçon de route (12) et/ou de l'au moins un tronçon partiel (A, B, C, D).

8. Procédé selon la revendication 7, selon lequel le dispositif de traitement (18) transmet (S60) la recommandation de conduite à un système d'assistance au conducteur (22), notamment à une commande longitudinale et/ou transversale d'au moins un véhicule cible (10).

9. Procédé selon la revendication 7 ou 8, selon lequel le dispositif de traitement (18) transmet (S80, S90) la recommandation de conduite (34) et/ou la carte (30) à un dispositif d'affichage (32) en vue de leur affichage.

10. Procédé selon l'une des revendications 7 à 9, selon lequel au moins un tronçon partiel (A, B, C, D) du tronçon de route (12) est repéré dans la carte (30) en fonction d'une certaine grandeur, déterminante pour le modèle de la situation de circulation, du volume de circulation, de la vitesse moyenne ou de la vitesse recommandée.

11. Procédé selon l'une des revendications précédentes, selon lequel au moins un véhicule tiers (14) est aussi un véhicule cible (10).

12. Dispositif de traitement (18) qui est conçu pour mettre en oeuvre les étapes, concernant un dispositif de traitement (18), d'un procédé selon l'une des revendications 1 à 11.

13. Véhicule automobile, notamment voiture particulière, comprenant un dispositif de traitement (18) selon la revendication 12.
